# EUROPEAN PATENT APPLICATION

(11) **EP 3 415 856 A1**
(43) Date of publication of application: **19.12.2018**
(21) Application number: 17175879.0
(22) Date of filing: 13.06.2017
(51) Int. Cl.: F28F 13/00, F28D 15/02, F28F 9/26, F16L 13/02, F16L 13/08, F16L 13/10

(54) **MODULAR HEAT EXCHANGER AND METHOD FOR MAKING THE SAME**

(71) Applicant: Nokia Solutions and Networks Oy, 02610 Espoo (FI)
(72) Inventor: JEFFERS, Nicholas, DUBLIN, 15 (IE); AGARWAL, Akshat, DUBLIN, 15 (IE); O'REILLY MEEHAN, Rudi, DUBLIN, 15 (IE)
(74) Representative: Novagraaf Technologies

(57) **Abstract**

The present invention relates to a module (2, 3) comprising a cell (21) having a lattice mesh structure (31) capable of transferring heat and a heat pipe (22, 32) provided within the lattice mesh structure (31), and also to a method for manufacturing a module (2, 3). The present invention also relates to an apparatus comprising a plurality of such modules (2, 3), to a method for manufacturing such an apparatus, and also to a connector (4) suitable for connecting an end of the heat pipe (22, 32) of such module (2, 3).

## Description

### Field of the Invention

The present invention relates to heat exchangers for example for electronic and/or photonic systems. The invention also relates to a method for building such heat exchangers.

By heat exchanger, it is meant, in the sense of the present invention a heat sink or passive heat exchanger that transfers the heat generated by any heat generating device that requires cooling, such as electronic and/or photonic devices or an engine in a car.

### Background

Electronic systems contain multiple component heat sources which are densely packed and must be maintained below strict temperature limits to ensure their reliability. A key requirement is to transfer the heat generated by these components efficiently (i.e. with minimal additional work input, ideally passive) preferably in the smallest volume possible. This way, the thermal management system minimally impacts the volume of the overall architecture. Current heat pipes and heat exchangers are used for this purpose. The end solution is typically constructed from an assembly of individual parts designed in isolation. This means that non-optimal thermal performance may exist in the cooling system. Larger volumes are also occupied by this arrangement.

However, modern electronic equipment, e.g. next generation 5G wireless products would typically be required to be smaller, lighter, and of different shapes in order to conform to the environment in which they're placed and enable wireless connectivity to next generation users such as drones who operate at altitude.

### Summary

Therefore, a first embodiment of the invention is a module comprising a cell having a lattice mesh structure capable of transferring heat and a heat pipe provided within the lattice mesh structure, the heat pipe having an end configured to receive a connector configured to enable connection with a respective end of a heat pipe of another cell.

The heat sink of the present disclosure makes it possible to build unique product shapes for different applications. Conformal heat sink shapes allow products to blend into their environment

Advantageously, the cells may have a tetrahedral or a truncated octahedron shape, and more generally any shape that can be used to tessellate a volume efficiently could be used, for instance a tetrahedral, a truncated octahedron, a cubic or a rhombic dodecahedron shape.

Advantageously, the heat pipe may have a branched, a straight or a bent shape.

The modules of the invention may be coupled together (like a Lego® structure) to make an apparatus that can be of any desired shape. Thus, another embodiment of the invention is an apparatus comprising a plurality of modules according to the invention, wherein a first module and a second module from the plurality of modules are connected to one another by a connector connecting an end of a first heat pipe of the first module to an end of a second heat pipe of the second module.

Advantageously, the cells from the plurality of the modules may be assembled to wrap around an object.

Advantageously, two or more heat pipes are connected to form a heat pipe network, and preferably a bifurcated network.

The heat pipe network effectively transfers the heat from the component (heat source) to the high surface area lattice structure that is attached to the outside of the heat pipe. The thermal energy is then transferred to a surrounding ambient such as for example air via forced or natural convection. Internal heat pipe networks can segregate the module to prevent thermal contamination of components.

Another embodiment of the present invention is a method for manufacturing the module of the invention, comprising:
- selecting using one or more smart algorithms, parameters related to a structure of the module said parameters comprising a density of said module; and a targeted heat pipe for said module; and
- producing the module based on said selected parameters by additive manufacturing.

Another embodiment of the present invention is a method of manufacturing an apparatus comprising a plurality of manufactured modules according to the method of the invention, said method further comprising:
- assembling the manufactured modules, by using a connector to connect an end of a first heat pipe of the first module to an end of a second heat pipe of the second module; and
- heating the assembled modules for annealing the assembled modules and sealing the heat pipes.

Yet another embodiment of the present invention is a connector comprising:
- a hollow tube with a first ring of bonding material having a melting temperature which is lower than the melting temperature of the hollow tube, said first ring of bonding material being suitable for being inserted into a first heat pipe and sealing the connector to an end of the first heat pipe by an annealing process, and
- a lip extending outwardly from said hollow tube and being suitable for preventing the connector from sliding entirely into the module.

By bonding material, in the sense of the present disclosure it is meant to refer to a material having a melting point lower than the pieces it is intended to join, i.e. the melting point of the hollow tube on the one hand and the melting point of the heat pipe on the other hand. An example of such bonding material may be solder.

According to a first specific embodiment, the connector may further comprise a second ring of bonding material having a melting temperature which is lower than the melting temperature of the hollow tube, said second ring of bonding material being suitable for being inserted into a second heat pipe and sealing the connector to an end of the second heat pipe by an annealing process, the lip being arranged so as to separate the first metal ring and the second metal ring.

In the frame of this first embodiment, the first heat pipe may be provided in a first heat transfer structure and the second heat pipe may be provided in a second heat transfer structure.

According to a second specific embodiment, the connector may further comprising an end cap extending out of the connector.

This end cap may be provided with a heat tube extension that is suitable for crimping and sealing when the heat pipe is charged with working fluid.

Advantageously, the connector may further comprise an end cap extending the out of the connector.

Advantageously, the connector may be configured to be used with the apparatus according to the disclosure.

### Brief Description of the Drawings

Some embodiments of the present disclosure are now described, by way of example only, and with reference to the accompanying drawings, in which:

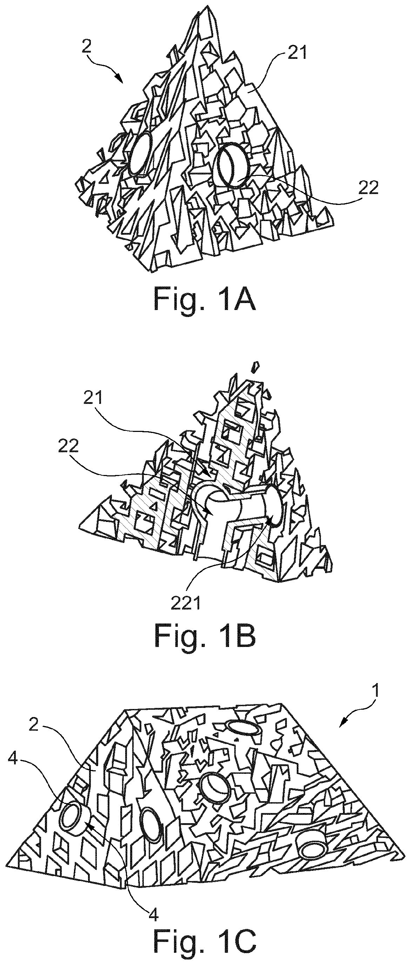

- Figure 1 schematically illustrates an example of a first embodiment of a module according to the disclosure that comprises a first embodiment of a sink cell (also herein referred to as cell for simplicity) with a lattice mesh structure and a heat pipe provided within the lattice mesh structure, in which:
   ∘ Figure 1A is a perspective view of this first embodiment of the module;
   ∘ Figure 1B is a cross-section view of this first embodiment of the module ;
   ∘ Figure 1C is a perspective view of the initial construction of an apparatus according to the disclosure from three sink cells according to this first embodiment, said apparatus consisting of a modular heat sink ;
- Figure 2 schematically illustrates the modules of figure 1 (First embodiment) coupled together to form a modular heat sink that wraps around a pole, according to some embodiments.
- Figure 3 schematically illustrates an example of a second embodiment of a module according to the disclosure that comprises a second embodiment of a sink cell with a lattice mesh structure and a heat pipe provided within the lattice mesh structure, in which:
   ∘ Figure 3A comprises a cross-section view of this second embodiment of module showing a heat pipe passing through a lattice mesh structure, and a perspective view of this sink cell showing the lattice mesh structure;
   ∘ Figure 3B is a cross-section view of this second embodiment of module showing the assembling of two sink cells according to this second embodiment, and notably an embodiment of a connector according to the disclosure;

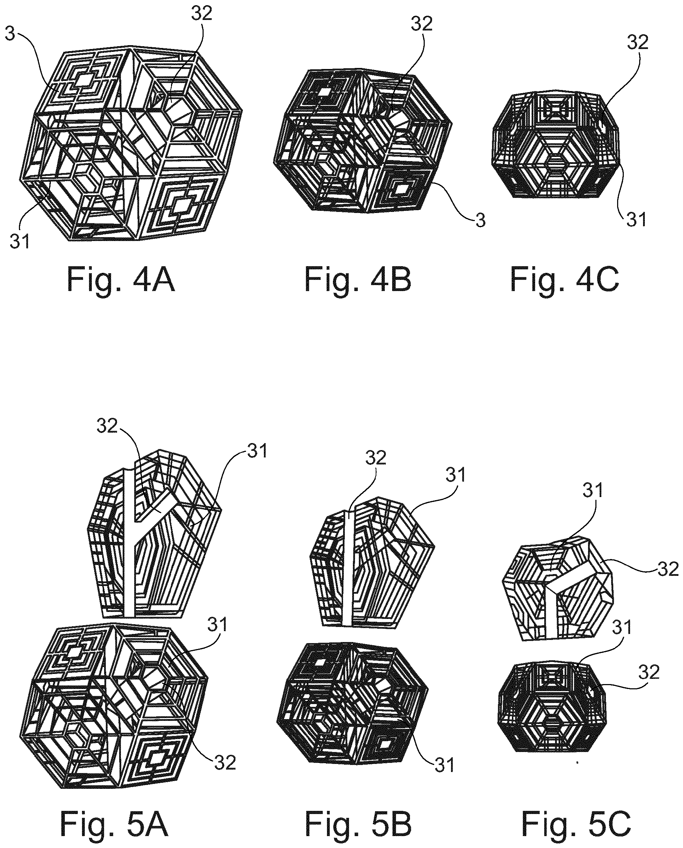

- Figure 4 shows three examples of perspective views of modules according to the second embodiment having different cell densities;
- Figure 5 shows three combined views (e.g. perspective and cross section views) of modules according to the second embodiment having different structures;

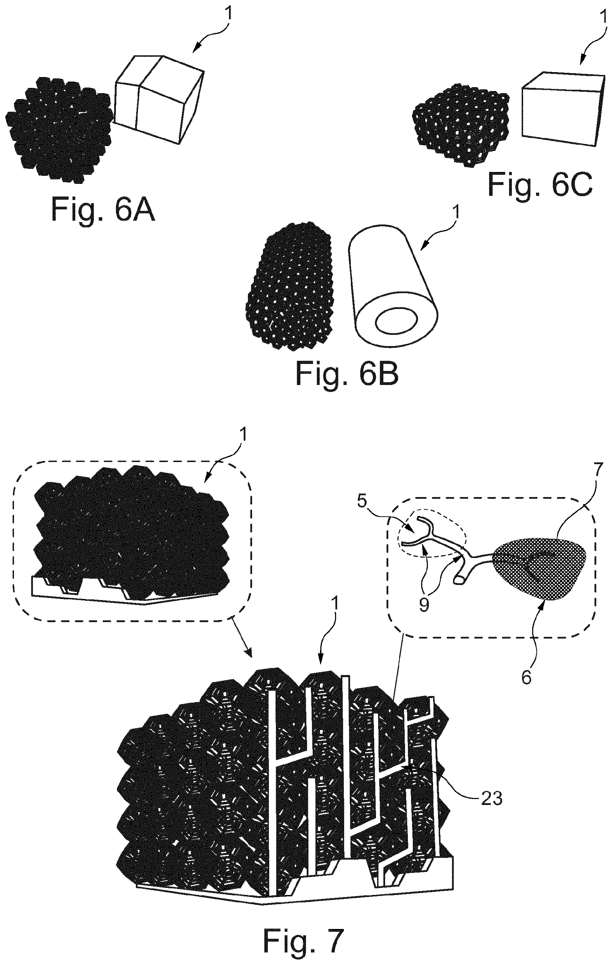

- Figure 6 shows three perspective views of apparatuses according to the disclosure, consisting of modular heat sinks having different shapes;
- Figure 7 shows a bifurcated network of heat pipes in a heat sink according to some embodiments where the sink cells according to the second embodiment are stacked into a cube formation;

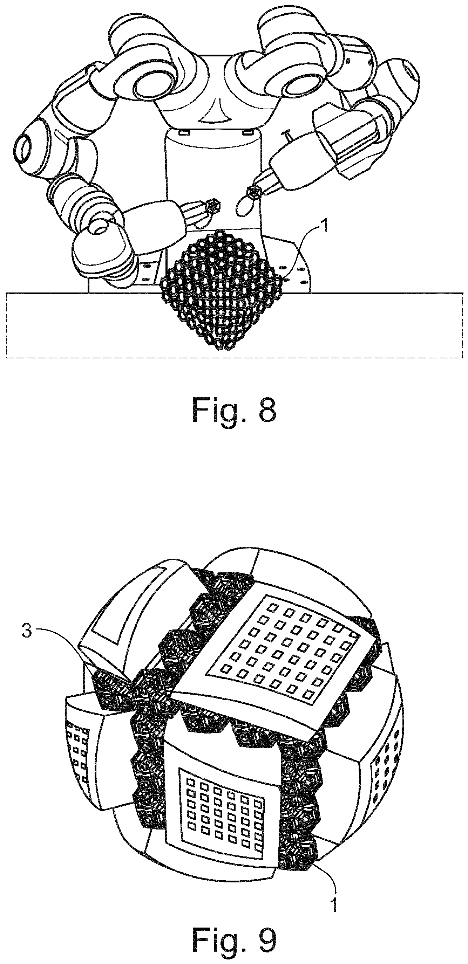

- Figure 8 shows the manufacturing of a heat sink according to the disclosure where selected sink cells are assembled via robotics;

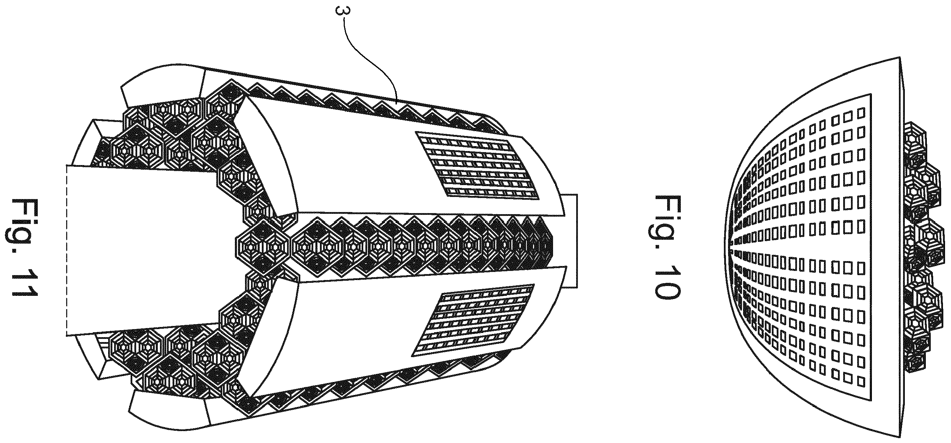

- Figures 9 to 11 are perspective views of some non-limiting examples of conformal products such as indoor (corner indoor product in figure 10) or outdoor products (figures 9 and 11) in which a heat exchanger according to the invention is implemented;

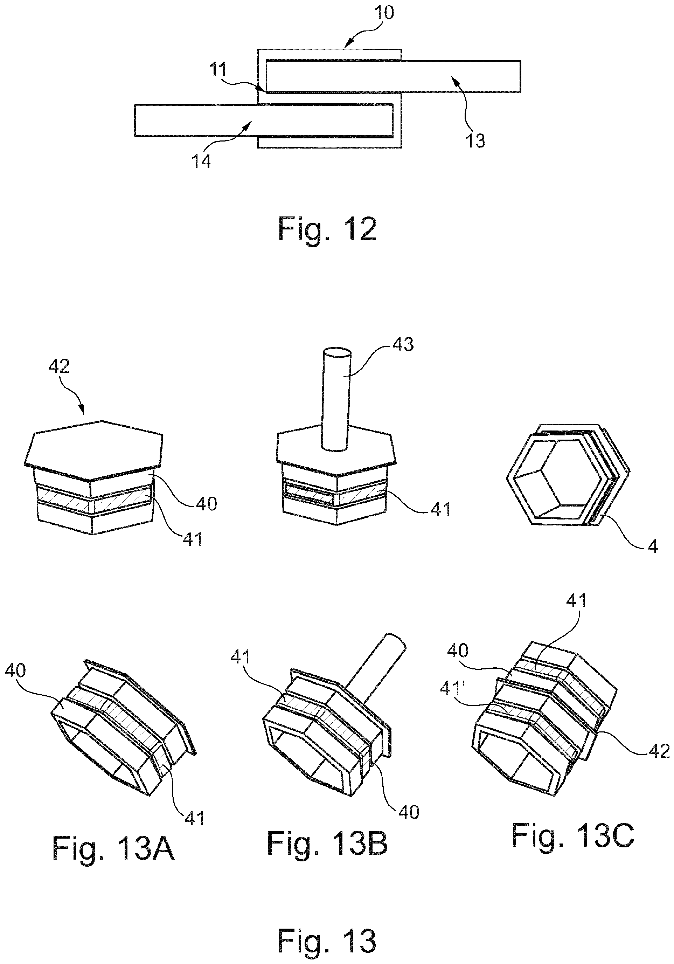

- Figure 12 illustrates an example of a known connector for coupling individual heat sink cells together to form a heat sink,
- Figure 13 illustrates three different embodiments of a connector according to the disclosure that is configured to be used with the apparatus according to the disclosure.

Elements corresponding to the same embodiments in the figures are hereafter identified by like reference numerals.

### Description of Embodiments

In order to fit cooling solutions within smaller volumes, transfer heat from multiple sinks, and increase or even maintain heat dissipation levels, a change in heat exchanger architecture is desired.

Today's heat pipes, heat sinks and heat exchangers are typically constructed from common metal processing techniques. Heat pipes typically have single evaporator and condenser sections for transporting heat from a hot end adjacent to the evaporator section to the point where a heat sink is required at the condenser end. Known heat sinks and multi fluid heat exchangers (e.g. liquid-air heat exchanger) also utilize conventional manufacturing processes including casting, machining, and extrusion, folded and skived fins. As a result, current heat pipes and heat exchangers are constrained to simply shaped designs that are extrusions of two-dimensional objects (rectangular, circular, etc.).

Constraining the design of the cooling solution to these non-arbitrary shapes ultimately constrains the product design. Given that the volume of the cooling solution can be above 50% of the total product volume in many applications, this constraint also impacts the final product shape and aesthetics. Hence, many of today's electronic systems (e.g. metrocell, remote radio head, server, cabinet, etc.) are configured in box-like shapes.

However, this type of design negatively impacts the thermal performance capabilities of complex, high density electronic systems.

In order to improve on the current state, a step-change is desired where the thermal solution can conform to any shape and structure that meets the product requirements.

In figures 1A and 1B is shown an example of a first embodiment of a module (also called "HEBBs" for *"heat exchanger building blocks'*)*.*

Figure 1A shows in particular that the module 2 comprises a sink cell 21 having a lattice mesh structure, in this example of tetrahedral shape, and a heat pipe 22 that penetrates the lattice mesh structure of the cell 21. The heat pipe 22 may be a thermosiphon vapor tube.

By lattice mesh structure, it is meant in the context of the present invention, to refer to a structure having a high surface area in a low volume.

The lattice mesh structure may be made from any suitable material which may be made by additive manufacturing (or 3D printing) processes. Examples of such materials may metal such as Aluminum or non-metal such as conductive plastic or a combination thereof. A good thermal conductivity in the material is preferred. Non-metal materials may have an advantage of being light weight or corrosion resistant.

The heat pipe 22 can be printed with wall having a thickness as low as 250 µm to 500 µm.Figure 1B is a cross section view of the module of figure 1A showing more particularly an example of how the heat pipe 22 may penetrate in and traverse through the high surface area low volume heat sink cell 21. As shown, the heat pipe 22 comprises a hollow tube to enable movement of vapor therein. A groove 221 is designed into the end of the tube 22 to allow for insertion of a portion of a connector 4 as will be described in further detail below. This connector 4 is used to join the cells 2 together to finally make a network of tubes and thus a network 23 of heat pipes (as shown in figure 7) within a heat sink structure. In this embodiment (see below figure 1C), the tubes 22 have open ends thus allowing vapor to travel between cells 21, however, the end of the tubes can alternatively be closed to cause each cell 21 to be completely sealed with respect to the movement of vapor. The heat pipe network 23 effectively transfers the heat from the component to the high (or large) surface area of the lattice mesh structure that wraps around the outside of the heat pipe 22. The thermal energy is then transferred to the surrounding ambient, e.g. air via forced or natural convection. Since the heat pipe 22 and the lattice structure cell 21 are built together using additive manufacturing (or 3D printing), the thermal energy in the heat pipe 22 conducts away and spreads across the high surface of the lattice structure cell 21, after which the thermal energy is dissipated into the airflow via forced convection.

The module 2 as proposed herein may be manufactured using additive manufacturing (or 3D printing). A non-limiting example of manufacturing may involve the selection of a number of parameters related to the desired structure of the module. Such parameters may comprise the density of the module and a design targeting a suitable arrangements for one or more heat pipes to be provided in said module. Such selection of parameters may be made one or more smart algorithms. Once such parameters are determined, the module may be manufactured based on said selected parameters by additive manufacturing.

Figure 1C shows more particularly an initial construction of a modular heat sink 1 according to this first embodiment where three adjacent modules 2 of tetrahedral shape are joined together via respective cell connectors 4 (clearly shown by figure 1B and figures 3B and 7). The connector 4 can either allow vapor to travel between adjacent modules 2 or it can be configured to completely seal individual heat pipes to which they are attached for preventing vapour from traveling between cells in which case solid state conduction between adjacent lattice structures may serve to transfer the thermal energy between cells. Using this technique it is possible to build up almost any desired shaped heat sink 1.

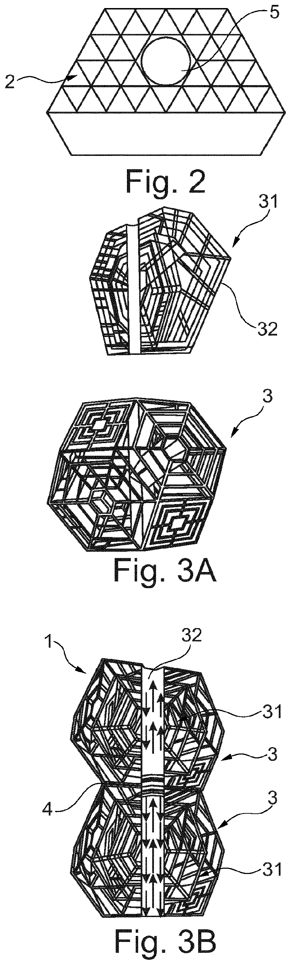

An example of a specific arrangement is shown in figure 2, where the modular heat sink 1, comprising a plurality of modules 2, is configured to wrap around an object, e.g. a pole 5.

The connector 4 may be made separately from the lattice structure of the cell 2 or built in it during the same manufacturing process. Further details related to the connector is provided with reference to figure 13.

In figure 3 (comprising figures 3A and 3B) is shown a second embodiment of a module 3 (also called *"building block"* hereinafter") of a modular heat sink according to the disclosure. In a similar manner as for the first embodiment, the module 3 comprises a lattice mesh structure 31, in this example of truncated octahedron shape, and a heat pipe 32 that penetrates the lattice mesh structure 31 (see figure 3A). In some embodiments, the heat pipe 32 may be a thermosiphon vapor tube.

Figure 3B shows more particularly the assembling of two modules 3 according to this second embodiment. In particular, figure 3B shows a first embodiment of a connector 4 according to the disclosure used to couple these modules 3 together. To illustrate the connection, the modules 3 have been cross sectioned. Detailed description related to the connector 4 and its use for coupling the modules 3 together is provided with reference to figure 13.

Figure 4 show three perspective views of modules according to a second embodiment wherein modules with different cell densities are shown. As used herein, the term density when referring to the mesh structure of the sink cells is to be understood to refer to the amount of thermally conductive elements available in a unit volume wherein the plurality of thermally conductive elements within the structure of the sink cell define the thermally conductive surface used for heat transfer. Therefore, the sink cell of a module according to the second embodiment may have a low density mesh structure (as shown in figure 4A), or a medium density mesh structure (as shown in figure 4B) or a high density mesh structure (as shown in figure 4C). A higher density means that there is more convective surface area allowing more thermal energy to be dissipated by an individual cell, however there may be an airflow pressure drop penalty.

Figure 5 shows combined views (e.g. perspective and cross section views) of three modules according to the second embodiment having different structures. In Figure 5A, the sink cell comprises a branched heat pipe structure. In Figure 5B, the sink cell comprises a straight heat pipe. In Figure 5C, the sink cell comprises a bent heat pipe. The three heat pipe shapes shown in Figure 5 are just illustrative and non-limiting examples of possible configurations, however any other configuration could likewise be used to build up a heat pipe network 23 such as for example the one shown in cross section in Figure 7.

Figure 6 shows three perspective views of heat sinks according to the disclosure having different shapes such as rhombic dodecahedron (see figure 6A), or cubic (see figure 6B) or cylindrical (see figure 6C). It is to be noted however that the sink cells of heat sinks can be plugged together in any suitable manner to form any desired shape which are different from the shapes illustrated by figure 6.

Figure 7 shows various exemplary views of a heat sink 1 comprising a plurality of modules 3 according to the second embodiment of the invention. In one example, the modules 3 are stacked to form a cube formation and their heat pipes form a heat pipe network 23, notably bifurcated as shown in the various views of the example of heat sink illustrated on figure 7. The heat sink of figure 7 is a branched heat pipe heat exchanger 1 based on a bifurcated design with one split 9 per pipe. However, more than one split 9 in the branching could also be envisaged for further distribution of the evaporator or condenser sections. The condenser section 5 of the heat pipe is used for the transfer of thermal energy received from the evaporator via vapor flow within the branches 32 to a heat dissipater, such as for example the modular heat sink of the present disclosure. The high (large) surface area 7 of the heat exchanger, coupled with a cooling medium 6 (e.g. air) is used to dissipate thermal energy into the ambient and condense the vapor into liquid form in the condenser section, where it is returned to the evaporator for example via capillarity using an internal wicking structure 8. The evaporator section, not shown here, could have a similar heat pipe structure if targeting multiple heat sources (without the high surface area fins attached). The branched design can distribute heat effectively for external convection. While the arrangement shown is just one example, any arbitrary branched shape could be designed and manufactured in a single pass using additive manufacturing and the emergence of many material choices, including plastics and metals. This would allow the thermal design to morph into any space, as opposed to what is currently done for designing heat exchanges for example for wireless products, where the product typically would be designed around the heat sink arrangement.

The heat sink cells may be assembled via robotics to form a heat sink according to the present disclosure, for example as shown in figure 8.

Figures 9 to 11 are perspective views of some non-limiting examples of conformal products such as indoor (corner indoor product in figure 10) or outdoor products (figures 9 and 11) comprising a spherical-shaped heat sink according to the invention. While these products are typically related to wireless application, any other suitable design for use in wireless or other applications may also be achieved using the technique disclosed herein.

Figure 12 illustrates an example of a known connector for coupling individual heat sink cells together to form a heat sink. Generally heat pipes 13, 14 are connected together using a common copper block 10, as shown by figure 12. From a thermal point of view the heat is transferred from one heat pipe 13 through some Thermal Interface Material (TIM) 11, usually a solder into the copper block 10 through another TIM and into the other heat pipe 14. This method incurs a significant thermal resistance between the heat pipes 13, 14 and also occupies a relatively large physical volume. Both of these issues would seriously hamper the potential performance gains of the modular heat sink approach.

Figure 13 illustrates three embodiments of a connector 4 according to the disclosure that is configured to be used with the apparatus according to the disclosure. One embodiment of the connector 4 may be specifically configured as a cap 42 to a heat pipe network (figure 13A). Another embodiment of the connector 4 may be used as a charging plug, with an extension 43 ready for crimping and sealing after heat pipe network is charged with the working fluid. In all these embodiments, Figures 13A to 13C show that the connector 4 comprises:
- a hollow tube 40 with a ring 41 made of a bonding material having a melting temperature which is lower than the melting temperature of the hollow tube, said ring 41 being suitable for being inserted into a first heat pipe 21, 31 and sealing the connector 41 to an end of the first heat pipe 21, 31 by an annealing process, and
- a lip 42 extending outwardly from said hollow tube 40 and being suitable for preventing the connector 4 from sliding entirely into the module 2, 3.

Figure 13C more particularly shows an embodiment of the connector 4 for structurly coupling two modules (not shown) together and also maintining a heat pipe connection between these modules resulting in a single heat pipe between the two modules. The connector 4 according to this embodiment further comprises a second bonding material ring 41' having a melting temperature which is lower than the melting temperature of the hollow tube 40, this second ring of bonding material 41' being suitable for being inserted into a second heat pipe and sealing the connector 4 to an end of the second heat pipe by an annealing process. The lip 42 is provided between the first ring 41 of bonding material and the second ring of bonding material 41'.

The rings may be made for instance from thermally activated glue or thermoplastic to create a seal between plastic parts at lower temperatures. Examples of the melting temperatures of the bonding material may be in the range of 80 to 250 °C.

Joining the modules using the connector as disclosed herein is advantageous because it results in little or no thermal resistant between modules optimizing heat sink performance.

The process for using the connector 4 for coupling two modules may be as follows:
- the connector 4 is inserted into an opening of a heat pipe of the first module. The lip 42 on the connector 4 prevents it from sliding entirely into the heat pipe itself, i.e. allowing only a first portion of the connector to be inserted in the heat pipe and leaving a second portion thereof out.
- The bonding material rings 41 are solid and are structured so as to allow the connector 4 to slide into the module unobstructed (before they are melted);
- the second module is added by coupling the opening of a heat pipe of the second module to the second potion of the connector 4;
- the coupled modules are then subjected to a process that would cause the two bonding material rings 41 to melt. For example the coupled modules may be passed through a reflow oven where the bonding material melts and expands thereby sealing the connector 4 to the heat pipe walls. The area around the rings is designed so that the capilary forces are strong enough to keep the bonding material from seeping out into the heat pipe section.
- The modules 3 are then cooled thus causing the bonding material to solidify, thus providing a common pipe there-between that can now be charged with a working fluid to form a common heat pipe (which may constitue the begininning of a heat pipe network).

The connector 4 according to this embodiment is thus an insert that allows a common vapour/liquid stream to exist between the modules without adding to the total volume that the finished heat sink occupies. Being able to connect these modules together with minimal thermal resistance is advantageous because any thermal resistance significantly affects the final heat sink performance.

The inner walls of the connector 4 can be structured in order to generate capillary pressure across the connector 4 (when liquid is provided therein) thus allowing the condensed liquid to return to the evaporator. This may be required if the heat pipe is designed to function at multiple orientations. No such structures are necessary if the heat pipe or thermosiphon rely on a gravity return of the liquid to the evaporator.

Another advantage to the connector 4 according to the disclosure is that of providing the potential to recycle and reuse the individual modules 3 at the end of the products life. In this regard, all that would be required is to the complete heat sink through a re-flow oven to melt the bonding material rings again to allow the modules to be separated. The seperated modules can then be used again for a different heat sink 1.

## Claims

1. A module comprising a cell having a lattice mesh structure capable of transferring heat and a heat pipe provided within the lattice mesh structure, the heat pipe having an end configured to receive a connector configured to enable connection with a respective end of a heat pipe of another cell.

2. The module of claim 1, wherein the cell has a tetrahedral, a truncated octahedron, a cubic or a rhombic dodecahedron shape.

3. The module of claim 1 or claim 2 wherein the heat pipe has a branched, straight or bent shape.

4. An apparatus comprising a plurality of modules according to any one of claims 1 to 3, wherein a first module and a second module from the plurality of modules are connected to one another by a connector connecting an end of a first heat pipe of the first module to an end of a second heat pipe of the second module.

5. The apparatus of claim 4, wherein cells from the plurality of the modules are assembled to wrap around an object.

6. The apparatus of any one of claims 4 to 5, wherein two or more heat pipes are connected to form a heat pipe network.

7. The apparatus of claim 6, wherein the heat pipes form a bifurcated network.

8. A method of manufacturing a module as defined according to any one of claims 1 to 4 comprising;
• selecting using one or more smart algorithms, parameters related to a structure of the module said parameters comprising a density of said module; and a targeted heat pipe for said module;
• producing the module based on said selected parameters by additive manufacturing.

9. A method of manufacturing an apparatus according to claims 4 to 8, the method further comprising:
• assembling the modules, by using a connector to connect an end of a first heat pipe of the first module to an end of a second heat pipe of the second module; and
• heating the assembled modules for annealing the assembled modules and sealing the connector to the first heat pipe and the second heat pipe.

10. A connector, comprising:
• a hollow tube with a first ring of bonding material having a melting temperature which is lower than the melting temperature of the hollow tube, said first ring of bonding material being suitable for being inserted into a first heat pipe and sealing the connector to an end of the first heat pipe by an annealing process, and
• a lip extending outwardly from said hollow tube and being suitable for preventing the connector from sliding entirely into the module.

11. The connector of claim 10, further comprising a second ring of bonding material having a melting temperature which is lower than the melting temperature of the hollow tube, said second ring of bonding material being suitable for being inserted into a second heat pipe and sealing the connector to an end of the second heat pipe by an annealing process, the lip being arranged so as to separate the first ring of bonding material and the second ring of bonding material.

12. The connector of claim 11 wherein the first heat pipe is provided in a first heat transfer structure and the second heat pipe is provided in a second heat transfer structure.

13. The connector of claim 10, further comprising an end cap extending out of the connector.

14. The connector of claim 13, wherein the end cap is provided with a heat tube extension that is suitable for crimping and sealing when the heat pipe is charged with working fluid.

15. The connector of any one of claims 10 to 14, configured to be used with the apparatus of any one of claims 4 to 7.
